# EUROPÄISCHE PATENTSCHRIFT

(11) **EP 0 317 946 B1**
(45) Veröffentlichungstag und Bekanntmachung des Hinweises auf die Patenterteilung: **13.10.1993**
(21) Anmeldenummer: 88119395.7
(22) Anmeldetag: 22.11.1988
(51) Int. Cl.: F16C 32/04, F16C 39/06

(54) **Axiales Magnetlager**
Axial magnetic bearing
Palier magnétique axial

(30) Priorität: 27.11.1987 DE 3740295
(43) Veröffentlichungstag der Anmeldung: 31.05.1989
(73) Patentinhaber: Asea Brown Boveri Aktiengesellschaft, 68309 Mannheim (DE)
(72) Erfinder: Glass, Dieter, D-6902 Sandhausen (DE); Eixelsberger, Wilfried, D-6945 Hirschberg (DE); Bührer, Peter, D-6147 Lautertal 1 (DE)
(74) Vertreter: Rupprecht, Klaus, Dipl.-Ing.

(56) Entgegenhaltungen:
- DE-A- 2 336 488
- DE-B- 1 165 144
- DE-B- 1 202 392
- DE-U- 7 511 229
- FR-A- 2 377 550
- US-A- 3 377 113

## Beschreibung

Die Erfindung betrifft ein axiales Magnetlager mit einer Axiallagerscheibe, die mit einer zentralen Befestigungsnabe, in der eine zu lagernde Welle befestigbar ist und peripheren Axiallagerflächen ausgerüstet ist, und die mit mindestens einem Elektromagneten zusammenarbeitet, wobei die Axiallagerscheibe mit im wesentlichen sich in radialer Richtung vom Bereich der Befestigungsnabe zur Peripherie der Axiallagerscheibe erstreckenden Kanälen für die Förderung eines gasförmigen Kühlmittels versehen ist. Weiterhin betrifft die Erfindung die Anordnung eines derartigen Magnetlagers mit einem Antrieb, insbesondere Elektromotor, wobei das Magnetlager im Innenraum des Gehäuses des Antriebs angeordnet ist.

Ein derartiges axiales Magnetlager und dessen Anordnung ist aus der DE-A-2 336 488 bekannt. Dort wird ein zusätzliches Gleitlager eingesetzt, um bei dem Einsatz von mehreren Pumpen hohe Lagerbelastungen an einzelnen Pumpen zu kompensieren. Die Axiallagerscheibe ist einstückig ausgebildet, so daß wegen der durch spanende Bearbeitung schlecht herstellbaren Kanäle die Axiallagerscheibe als Gußstück hergestellt werden muß. Die Gießtechnik ist jedoch nur bei großen Stückzahlen von Vorteil. Ferner behindern die relativ rauhen Gußoberflächen den gleichförmigen Strom des Kühlmediums durch die Kanäle.

Es stellt sich die Aufgabe bei einem axialen Magnetlager der eingangs genannten Art und dessen Anordnung den Aufbau der Axiallagerscheibe zu vereinfachen und die Gleichförmigkeit des Kühlmittelstromes zu erhöhen.

Gelöst wird diese Aufgabe erfindungsgemäß durch die Merkmale des Anspruchs 1 oder die Merkmale des Anspruchs 4.

Die Bearbeitbarkeit der Kanaloberfläche wird erleichert. Ferner kann die Axiallagerscheibe geänderten Kühlanforderungen durch Nacharbeiten der Kanalkonfiguration leichter angepaßt werden.

Die Radialschaufeln und somit die Kanäle haben zweckmäßige Krümmungen, die auf den gewünschten Massenstrom und die geforderte Druckerhöhung des gasförmigen Kühlmittels abgestimmt sind. Sind nur geringe Drücke für die Erzeugung eines ausreichenden Kühlmittelstromes erforderlich, so werden vorwärts gekrümmte oder gerade Radialschaufeln bevorzugt. Da in den meisten Fällen zur Überwindung des Strömungswiderstandes hohe Überdrücke, z. B. 1,5 bar, erforderlich sind, ist es zweckmäßig, daß die Radialschaufeln rückwärts gekrümmt sind. Die Form der Krümmung bezieht sich auf die Drehrichtung der Axiallagerscheibe.

Eine besonders einfache Herstellung einer Axiallagerscheibe mit geraden Schaufeln bzw. geraden Kanälen wird dadurch erreicht, daß die Kanäle jeweils aus radial und axial verlaufenden geraden Teilstücken bestehen.

Für die Anordnung des axialen Magnetlagers, dessen Axiallagerscheibe Kanäle aufweist, für einen elektrischen Antrieb, insbesondere Elektromotor, wobei das Magnetlager im Innenraum des Gehäuses des Antriebs angeordnet ist, empfiehlt es sich gemäß Anspruch 4, daß die Axiallagerscheibe von einer Ringöffnung im Gehäuse für den Austritt des gasförmigen Kühlmittels umgeben ist, wobei das Gehäuse innerhalb seiner Ringöffnung im wesentlichen radial verlaufende Leitschaufeln aufweist. Hierdurch wird die Förderung des gasförmigen Kühlmittels wesentlich verbessert und der hierzu erforderliche Energieaufwand wesentlich verringert. Hierbei ist es zweckmäßig, daß im Falle von gekrümmten Radialschaufeln die Leitschaufeln eine Krümmung aufweisen, die entgegengesetzt jener Krümmung verläuft, die die Radialschaufeln besitzt. Da die Radialschaufeln meistens rückwärts gekrümmt sind, werden die Leitschaufeln mit einer Vorwärtskrümmung versehen. Bei geraden Radialschaufeln sind die Leitschaufeln ebenfalls vorwärts gekrümmt.

Weitere Vorteile der Erfindung gehen aus der folgenden Beschreibung von Ausführungsbeispielen im Zusammenhang mit den schematischen Zeichnungen hervor.

Hierbei zeigt:
- Fig. 1: einen axialen Querschnitt durch ein axiales Magnetlager gemäß dem Stand der Technik, wobei nur die obere Hälfte des Magnetlagers dargestellt ist,
- Fig. 2: einen axialen Querschnitt gemäß der Linie II-II der Figur 3 durch die obere Hälfte eines Magnetlagers mit Kanälen gemäß der Erfindung,
- Fig. 3: einen teilweisen Schnitt durch den Gegenstand der Figur 2 gemäß einer rotationssymmetrischen Schnittfläche, deren Profil durch die Linie III-III angedeutet ist,
- Fig. 4: die Anwendung eines Magnetlagers entsprechend Figur 2 zur axialen Lagerung eines Antriebes in Form eines Elektromotors und
- Fig. 5: einen teilweisen Querschnitt durch den Gegenstand der Figur 4 gemäß einer Schnittebene, die durch die Linie VI-VI angedeutet ist.

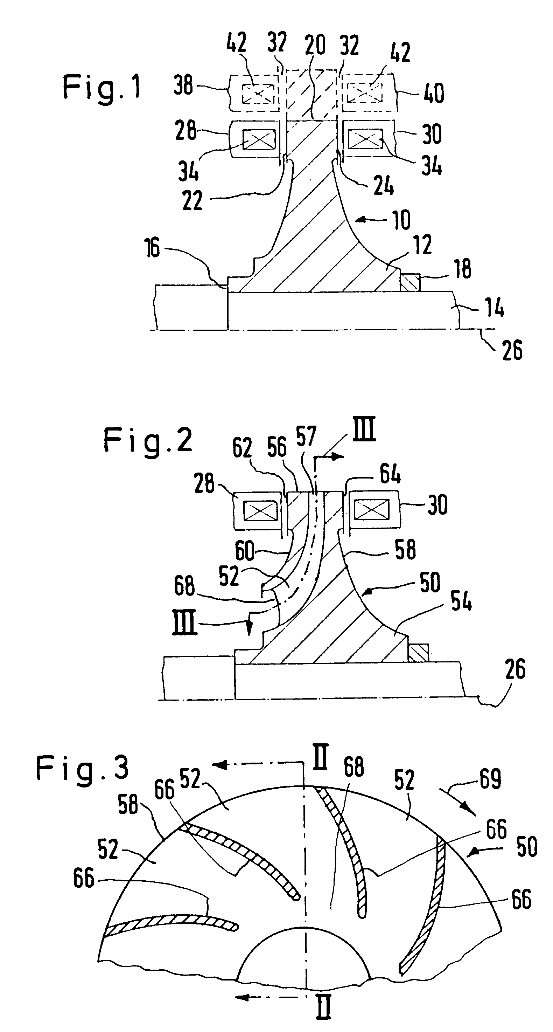

In der Figur 1 ist ein axiales Magnetlager gemäß dem Stand der Technik im Querschnitt gezeigt. Hierbei ist lediglich die obere Hälfte des Magnetlagers dargestellt, hinter der Schnittebene liegende Teile sind nicht abgebildet. Ein solches axiales Magnetlager ist für die berührungslose axiale Lagerung von Wellen vorgesehen, die durch axial wirkende Kräfte belastet sind. Das Magnetlager weist eine kreisförmige Axiallagerscheibe 10 auf, die mit einer zentrischen Nabe 12 versehen ist. Mit Hilfe dieser Nabe 12 ist die Axiallagerscheibe 10 auf der Welle 14 befestigt, für deren Lagerung das Magnetlager vorgesehen ist. Zur axialen Fixierung der Magnetlagerscheibe 10 auf der Welle 14 ist die Nabe 12 zwischen einer Stufe 16 der Welle 14 und einem auf der Welle 14 befestigten Ring 18 angeordnet. Die radiale Fixierung erfolgt durch eine nicht dargestellte Paßfeder.

Ausgehend von der Befestigungsnabe 12 verjüngt sich die Axiallagerscheibe 10 im Querschnitt zu ihrem äußeren Rand 20 hin. Hierbei ist im Bereich des äußeren Randes 20 an der in der Zeichnung linken Seite der Axiallagerscheibe 10 eine linke, periphere Axiallagerfläche und auf der rechten Seite entsprechend eine rechte periphere Axiallagerfläche 24 angeordnet. Die beiden Lagerflächen 22, 24 weisen identische Abmessungen auf, sind kreisringförmig sowie eben ausgebildet und verlaufen senkrecht zur Achse 26 der Welle 14, die beiden Axiallagerflächen 22, 24 sind daher parallel zueinander.

Der linken Axiallagerfläche 22 ist ein linker Elektromagnet 28, der rechten Lagerfläche 24 dementsprechend ein rechter Elektromagnet 30 zugeordnet. Zwischen den Elektromagneten 28, 30 und den zugeordneten Axiallagerflächen 22, 24 ist jeweils ein kreisringförmiger Luftspalt 32 angeordnet. Die Elektromagnete 28, 30 sind kreisringförmig ausgebildet, ihre den Axiallagerflächen 22, 24 jeweils gegenüberliegenden, ebenen Flächen verlaufen in Ebenen, die senkrecht auf der Achse 26 stehen. Die elektrischen Spulen 34 der Elektromagnete sind angedeutet, die elektrischen Anschlußleitungen sind nicht gezeichnet.

In Figur 1 ist noch eine Ausführungsvariante des axialen Magnetlagers mit gestrichelten Linien eingezeichnet. Ist nämlich das Magnetlager für das Abfangen von schweren Axiallasten oder zur Erhöhung der Sicherheit vorgesehen, so ist der linke Elektromagnet 28 von mindestens einem weiteren linken Elektromagnet 38 und der rechte Elektromagnet 30 von mindestens einem rechten weiteren Elektromagneten 40 umgeben. Dementsprechend sind die Axiallagerflächen 22 und 24 in radialer Richtung vergrößert, so daß auch die weiteren Elektromagneten 38 und 40 auf die Axiallagerflächen 22, 24 einwirken. Die weiteren Elektromagnete 38, 40 sind genauso ausgebildet wie die Elektromagnete 28 und 30. Sie weisen demnach auch elektrische Spulen 42 auf, die in Figur 1 angedeutet sind.

Während des Betriebs wird elektrischer Strom durch die Spulen 34 und gegebenenfalls durch die elektrischen Spulen 42 geleitet, so daß die Elektromagnete aktiviert sind. Hierdurch werden auf die Axiallagerflächen 22 und 24 magnetische Kräfte ausgewirkt, welche die Axiallagerscheibe 10 in der Schwebe halten, so daß das Magnetlager axiale Wellenkräfte aufnehmen kann, ohne daß die Axiallagerflächen 22 und 24 während des Umlaufs der Axiallagerscheibe 10 an den Elektromagneten 28 und 30 sowie gegebenenfalls an den Elektromagneten 38 und 40 anstreifen.

Durch die elektrischen Spulen 34 sowie gegebenenfalls 42 erwärmen sich die Elektromagnete. Diese Wärme wird durch Strahlung und Konvektion auf die Axiallagerflächen 22 und 24 übertragen, so daß auch die Lagerscheibe eine Erwärmung erfährt. Zusätzlich wird die Lagerscheibe 10 durch die von den Elektromagneten ausgehenden Kraftfeldern und durch Reibung mit dem die Axiallagerscheibe umgebenden gasförmigen Medium erwärmt, so daß eine Kühlung wünschenswert ist.

Figur 2 zeigt ein axiales Magnetlager gemäß der Erfindung in einer Darstellung entsprechend Figur 1. Zum Unterschied gegenüber dem Magnetlager gemäß Figur 1 ist die Axiallagerscheibe 50 mit einer Vielzahl von im wesentlichen in radialer Richtung verlaufenden Kanälen 52 versehen. Diese Kanäle sind gleichmäßig verteilt und erstrecken sich vom Bereich der Befestigungsnabe 54 bis hin zum äußeren, zylinderförmigen Rand 56 der Axiallagerscheibe 50 und münden dort durch eine Austrittsöffnung 57 aus. Es kann somit das gasförmige Kühlmittel vom Bereich der Befestigungsnabe 54 zum äußeren Rand 56 der Axiallagerscheibe 50 strömen. Die Kanäle 52 verlaufen innerhalb der Axiallagerscheibe 50 und teilen diese in eine Grundscheibe 58 und eine Deckscheibe 60, wobei die linke periphere Axiallagerscheibe 62 an der Deckscheibe 60, die rechte periphere Axiallagerfläche 64 dagegen an der Grundscheibe 58 vorgesehen ist.

Der Verlauf der Kanäle 52 innerhalb der Axiallagerscheibe 50 ist in der Schnittdarstellung gemäß Figur 3 deutlich zu erkennen. Danach sind die Kanäle 52 in peripherer Richtung durch Radialschaufeln 66 begrenzt, die gemäß der durch den Pfeil 69 angedeuteten Umlaufrichtung der Axiallagerscheibe 50 rückwärts gekrümmt sind. Die Begrenzung der Kanäle 52 in Richtung der Achse 26 wird durch die Grundscheibe 58 und die Deckscheibe 60 übernommen, wie deutlich aus Figur 2 zu entnehmen ist. Wie weiter zu erkennen ist, verengen sich gemäß Figur 2 die Kanäle 52 in axialer Richtung vom Bereich der Befestigungsnabe 54 zum äußeren Rand 56 hin. Die Austrittsöffnung 57 der Kanäle 52 ist dort in der Mitte zwischen den beiden Axiallagerflächen 62 und 64.

Die Grundscheibe 58, die Deckscheibe 62 sowie die Radialschaufeln 66 sind als Einzelteile hergestellt und durch Lötung, Schweißung oder Vernietung zur Axiallagerscheibe verbunden.

Während des Betriebs, bei dem die Axiallagerscheibe 50 eine Rotationsbewegung um die Achse 26 ausführt und axiale Kräfte der Welle aufnimmt, wird diese, genau wie beim Magnetlager gemäß Figur 1, durch die Elektromagnete 28 und 30 in der Schwebe gehalten. Gleichzeitig wird durch die Öffnungen 68, die sich im Bereich der Befestigungsnabe 54 befinden, das gasförmige Kühlmittel, das vorzugsweise aus Luft besteht, in die Kanäle 52 eingesaugt und zum äußeren Rand 56 hin gefördert, wo es aus den Kanälen 52 austritt. Hierbei wird eine intensive Kühlung der Axiallagerscheibe 50 erreicht, so daß diese in der Lage ist, Verlustwärme der Elektromagnete 28 und 30 und der Axiallagerscheibe aufzunehmen und an das Kühlmittel weiterzuleiten.

Die Kanäle 52 gemäß Figur 2 weisen im Bereich der Befestigungsnabe 54 Öffnungen 68 auf, die sämtlich auf der in der Zeichnung linken Seite der Axiallagerscheibe 50 angeordnet sind. Das Kühlmittel wird daher von der linken Seite der Axiallagerscheibe 50 angesaugt. Ist jedoch ein Ansaugen von der rechten Seite der Axiallagerscheibe 50 erforderlich, so sind die Kanäle zur rechten Seite der Axiallagerscheibe 50 zu führen. Soll dagegen das Kühlmittel sowohl von der linken als auch von der rechten Seite der Axiallagerscheibe 50 angesaugt werden, so empfiehlt es sich, daß die Kanäle 52 ihre Öffnungen 68 abwechselnd auf der linken und rechten Seite der Axiallagerscheibe haben. Dies ist in den Figuren nicht dargestellt.

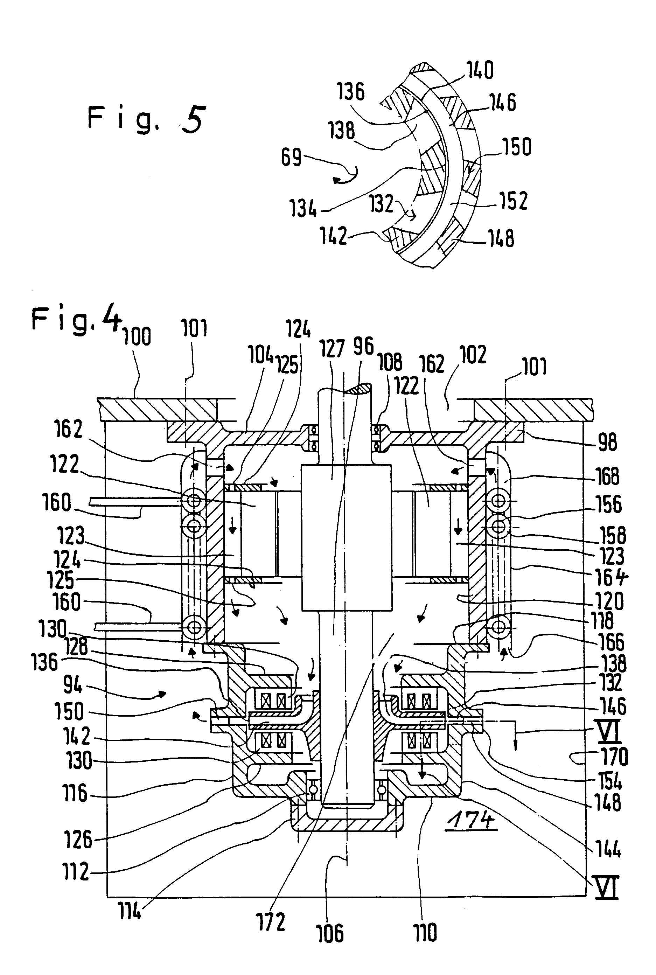

In Figur 4 ist ein Antrieb in Form eines Elektromotors 94 mit vertikal verlaufender Motorwelle 96 im vertikalen Zentralschnitt gezeigt. Der Antrieb ist hierbei mit einem axialem Magnetlager entsprechend der Figur 2 ausgerüstet. Ein Unterschied gegenüber Figur 2 besteht darin, daß das Magnetlager hier jeweils zwei Elektromagnete aufweist, die jeweils auf eine Axiallagerfäche einwirken.

Der Elektromotor 94 weist ein geschlossenes Gehäuse auf, das mit Hilfe eines Flansches 98 an der angedeuteten Wand 100 eines nicht dargestellten Bauteils, insbesondere eines Gebläses oder Verdichters, durch angedeutete Schrauben 101 befestigt ist. Die Motorwelle 96 ist hierbei durch eine Öffnung 102 in das Bauteil eingeführt und trägt dort die Schaufeln des Gebläses oder Verdichters.

Im Bereich des Flansches 98 ist am Motorgehäuse ein erstes Lagerschild 104 vorgesehen, das scheibenförmig ausgebildet ist und ungefähr senkrecht zur Vertikalachse 106 der Motorwelle verläuft. Im Zentrum des ersten Lagerschildes 104 sind zwei Kugellager 108 befestigt, die die Motorwelle 96 in radialer Richtung führen. Hierbei ist zwischen den Kugellagern 108 und dem Lagerschild ein Gleitsitz vorhanden, so daß sich die Motorwelle in axialer Richtung (Richtung der Vertikalachse 106) ungehindert bewegen kann. Um den Innenraum 172 des Elektromotors abzudichten, sind im Bereich der Kugellager 108 nicht dargestellte Dichtungen angeordnet.

In dem dem ersten Lagerschild gegenüberliegenden, in der Zeichnung unteren Ende des Elektromotors 94 ist ein scheibenförmiges, zweites Lagerschild 110 angeordnet, das ebenfalls ungefähr senkrecht zur Vertikalachse 106 verläuft. Im Zentrum dieses zweiten Lagerschildes 110 ist das in der Zeichnung untere Ende der Motorwelle 96 mit Hilfe eines dort befestigten Kugellagers 112 in radialer Richtung gelagert. Auch hier ist es durch geeignete Ausbildung des Lagersitzes möglich, daß sich die Motorwelle in axialer Richtung leicht bewegen kann. Der Bereich des Kugellagers 112 ist durch einen äußeren Lagerdeckel 114 zum Außenraum hin verschlossen.

Das zweite Lagerschild 110 ist an einem ungefähr ringzylindrischen Lagergehäuse 116 angeordnet, das Bestandteil des Elektromotorgehäuses ist. Das Lagergehäuse ist hierzu durch einen ringförmigen Flansch 118 durch angedeutete Schrauben an jenem ringzylindrischen Gehäuseteil 120 des Elektromotors befestigt, in dem das Statorblechpaket 122 des Elektromotors samt nicht eingezeichneter elektrischer Wicklung mit Hilfe von zwei kreisringförmigen Scheiben 124 befestigt ist. Die Scheiben 124 sind senkrecht zur Vertikalachse 106 im Gehäuseteil 120 festgelegt und halten das Statorblechpaket zwischen sich eingeschlossen. Zwischen dem Statorblechpaket 122 und dem Gehäuseteil 120 ist ein Ringraum 123 gebildet, der durch eine Vielzahl von Öffnungen 125, die in den Scheiben 124 angeordnet sind, mit dem Innenraum 172 des Elektromotors verbunden ist. Innerhalb des Statorblechpaketes 122 ist der Läufer 127 des Elektromotors auf der Motorwelle 96 angeordnet.

Im Lagergehäuse 116 ist mit Abstand zum zweiten Lagerschild 110 eine ungefähr senkrecht zur Vertikalachse 106 verlaufende kreisringförmige erste Tragscheibe 126 angeordnet, die die Motorwelle 96 mit ausreichendem Abstand umgibt. Mit axialem Abstand zur ersten Tragscheibe 126 ist im Lagergehäuse 116 noch eine zweite Tragscheibe 128 vorgesehen, die genauso ausgebildet und angeordnet ist wie die erste Tragscheibe 126. An den einander zugewandten ebenen Flächen der Tragscheiben 126, 128, die senkrecht auf der Vertikalachse 106 stehen, sind jeweils die Elektromagnete 130 des axialen Magnetlagers befestigt. Die Elektromagnete enthalten jeweils zwei elektrische Spulen. In den kreisringförmigen Zwischenraum zwischen den Elektromagneten 130 greift die Axiallagerscheibe 132 des Magnetlagers ein, wobei zwischen der Axiallagerscheibe und den Elektromagneten ausreichend axiales Spiel für eine berührungslose, axiale Lagerung vorgesehen ist. Die Axiallagerscheibe 130 ist auf der Motorwelle 96 befestigt und so ausgebildet, wie es im Zusammenhang mit Figur 2 beschrieben wurde. Die elektrischen Anschlußleitungen der Elektromagnete sind in Figur 4 nicht eingezeichnet.

Der zylindrische äußere Rand 134 der Axiallagerscheibe 132 und somit jener Bereich, in dem sich die Austrittsöffnungen 136 der radialen Kanäle 138 befinden, verläuft mit geringem Spiel zur ringförmigen Innenwand 140 des Lagergehäuses 116. Dies ist deutlich aus Figur 5 zu erkennen, die einen Schnitt gemäß der Schnittlinie VI-VI durch Figur 4 zeigt. Auch erkennt man dort die rückwärts gekrümmten Radialschaufeln 142 sehr deutlich.

In der ringzylindrischen Wand 144 des Lagergehäuses 116 ist gegenüber den Austrittsöffnungen 136 der Kanäle 138 eine kreisringförmige Ringöffnung 146 vorgesehen, deren axiale, vorzugsweise gleichbleibende lichte Weite mindestens genauso groß ist wie die axiale lichte Weite der Austrittsöffnungen 136. Hierbei ist die Lage der Ringöffnung 146 so gewählt, daß die Austrittsöffnungen 136 und die Ringöffnung 146 während des Betriebs fluchten und das von den Kanälen 138 austretende Kühlmittel leicht in die Ringöffnung 146 übertreten kann. Die Ringöffnung 146 durchdringt die zylindrische Wand 144 und mündet in den Raum 174.

Im radial äußeren Bereich 148 der Ringöffnung 146 ist eine Vielzahl von vorwärtsgekrümmten, feststehenden Leitschaufeln 150 gleichmäßig verteilt angeordnet, die die Ringöffnung 146 in axialer Richtung überbrücken und den Zusammenhalt des Lagergehäuses 116 aufrechterhalten (vgl. Figur 5). Im radial inneren Bereich 152 der Ringöffnung sind dagegen keine Leitschaufeln angeordnet. Die radialen Längen der Bereiche 148 und 152 sind ungefähr gleich. Um der Ringöffnung 146 in radialer Richtung ausreichende Länge zu geben, ist das Lagergehäuse 116 außen mit einem Ringwulst 154 versehen, in den sich die Ringöffnung 146 erstreckt.

Um das Gehäuseteil 120 ist außen eine Wicklung von Kühlrohren 156 angebracht, wobei die Kühlrohre mit äußeren, radialen Rippen 158 versehen sind. In Figur 4 sind nur einige der Kühlrohrwindungen angedeutet. Die Enden des Kühlrohres sind mit Anschlußleitungen 160 versehen.

Zwischen dem Ende der Kühlrohrwicklung und dem Flansch 98 ist im ringzylindrischen Gehäuseteil 120 eine Vielzahl von radialen Öffnungen 162, vorzugsweise Bohrungen, gleichmäßig am Umfang verteilt angeordnet, die von außen in den Innenraum 172 des Elektromotors 94 führen. Die Kühlrohrwicklung ist von einem ringzylindrischen Mantel 164 umgeben, der an den Rippen 158 dicht anliegt. Das dem Lagergehäuse 116 benachbarte Ende des Mantels 164 ist offen und bildet eine ringförmige Eintrittsöffnung 166 für das Kühlmittel. Das entgegengesetzte Ende des Mantels 164 ist mit dem Gehäuseteil 120 derart dicht verbunden, daß sich die Öffnungen 162 innerhalb des Mantels 164 befinden und in den zwischen dem Mantel 164 und dem Gehäuseteil 120 gebildeten Ringraum 168 münden.

Im vorliegenden Ausführungsbeispiel steht der Elektromotor 94 mit der Umgebungsluft nicht in Berührung, er ist in einer luftdichten Kaverne angeordnet oder von einem luftdichten Gehäuse mit Abstand umgeben. Dies ist in Figur 4 durch das Gehäuse 170 schematisch angedeutet. Man erkennt weiter, daß die Anschlußleitungen 160 durch das Gehäuse 170 nach außen geführt sind.

Während des Betriebs des Elektromotors 94 übernehmen die Kugellager 108 und 112 die radiale Führung der vertikalen Motorwelle 96, wogegen die Axiallagerscheibe 132 im Zusammenwirken mit den von elektrischem Strom durchflossenen Elektromagneten 130 die berührungslose axiale Lagerung der Motorwelle bewirkt. Die axiale Lagerung nimmt hierbei axiale Kräfte auf, die in Richtung der Vertikalachse 106 auf die Motorwelle 96 einwirken. Diese Kräfte setzen sich zusammen aus dem Eigengewicht der rotierenden Teile und den axialen Kräften, die von der an die Motorwelle 96 angekuppelten Maschine verursacht werden. Gleichzeitig saugt die Axiallagerscheibe 132 mit Hilfe der in ihr vorgesehenen Kanäle 138 gasförmiges Kühlmittel, vorzugsweise Luft, Stickstoff oder Helium, das sich im Innenraum befindet, aus dem Innenraum 172 des Elektromotors ab und fördert es durch die Ringöffnung 146 in den Raum 174 zwischen Elektromotor 94 und Gehäuse 170. Von hier strömt das Kühlmittel durch den Ringraum 168 zwischen Mantel 164 und Gehäuseteil 120 zu den Öffnungen 162 und tritt in den Innenraum 172 des Elektromotors ein. Während der Strömung im Ringraum 168 ist das gasförmige Kühlmittel in Kontakt mit den Kühlrohren 156 und deren Rippen 158 und gibt Wärme an das durch die Kühlrohre fließende Kühlwasser oder Kältemittel ab, d. h., das Kühlmittel wird abgekühlt. Die Zu- und Abfuhr des Kühlwassers oder Kältemittels durch die Anschlußleitungen 160 erfolgt hierbei derart, daß der Wärmetausch im Gegenstrom erfolgt.

Das gasförmige Kühlmittel nimmt während seiner Strömung von den Öffnungen 162 zu der Axiallagerscheibe 132 (siehe Pfeile) die Verlustwärme des Elektromotors auf, beim Durchströmen der Kanäle 138 der Axiallagerscheibe wird zusätzlich noch die Verlustwärme des Magnetlagers aufgenommen. Diese Verlustwärme wird dann mit Hilfe der Kühlrohre 156 an das Kühlwasser oder Kältemittel abgegeben und dann aus dem System abgeführt. Aus Vorstehendem ergibt sich ohne weitere Erläuterung ganz klar, daß durch den Einsatz des erfindungsgemäßen Magnetlagers das Kühlproblem auf einfache Weise gelöst wurde, und daß zusätzliche Fördereinrichtungen für das Kühlmittel nicht erforderlich sind. Insbesondere ist ein gesondertes Lüfterrad, das üblicherweise Bestandteile eines Elektromotors ist, nicht erforderlich.

Ist der Elektromotor 94 der Umgebungsluft unmittelbar ausgesetzt, d. h. das Gehäuse 170 ist nicht vorhanden, so entfällt zweckmäßig die Kühlschlange 156 und der Mantel 164. Aus der Ringöffnung 146 strömt jetzt das erhitzte Kühlmittel, das im vorliegenden Fall aus Luft besteht, in die Umgebung aus, während gleichzeitig Luft aus der Umgebung durch die Öffnungen 162 in den Innenraum 172 eintritt und die Verlustwärme von Elektromotor und Magnetlager aufnimmt und an die Umgebung abführt.

Die elektrischen Anschlußleitungen, die zu den Elektromagneten und zu der elektrischen Wicklung des Elektromotors führen, sind in den Figuren nicht dargestellt. Durch diese elektrischen Anschlußleitungen wird elektrischer Strom während des Betriebes zugeführt.

## Patentansprüche

1. Axiales Magnetlager mit einer Axiallagerscheibe (50; 76; 132), die mit einer zentralen Befestigungsnabe (54; 78), in der eine zu lagernde Welle (96) befestigbar ist, und peripheren Axiallagerflächen (62, 64) ausgerüstet ist, und die mit mindestens einem Elektromagneten (28, 30; 38, 40; 130) zusammenarbeitet, wobei die Axiallagerscheibe (50; 76; 132) mit im wesentlichen sich in radialer Richtung vom Bereich der Befestigungsnabe (54; 78) zur Peripherie der Axiallagerscheibe (50; 76; 132) erstreckenden Kanälen (52; 53; 138) für die Förderung eines gasförmigen Kühlmittels versehen ist, **dadurch gekennzeichnet,** daß die Axiallagerscheibe (50; 76; 132) aus Einzelteilen besteht, einer kreisförmigen Grundscheibe (58), einer kreisförmigen Deckscheibe (60) und Radialschaufeln (66; 142), die derart zusammen verbunden sind, daß die Kanäle (52; 138) in axialer Richtung durch die Grundscheibe (58) und die Deckscheibe (60), in radialer Richtung durch die Radialschaufeln (66; 142) begrenzt sind, wobei an der Grundscheibe (58) und an der Deckscheibe (60) die Axiallagerflächen (62, 64) angeordnet sind.

2. Magnetlager nach Anspruch 1, dadurch gekennzeichnet, daß die Radialschaufeln (66; 142) in Bezug auf die Drehrichtung (69) rückwärts gekrümmt sind.

3. Magnetlager nach Anspruch 1, dadurch gekennzeichnet, daß die Kanäle jeweils aus radial und axial verlaufenden geraden Teilstücken bestehen.

4. Anordnung eines Magnetlagers nach mindestens einem der Ansprüche 2 oder 3, mit einem Antrieb, insbesondere Elektromotor, wobei das Magnetlager im Innenraum (172) des Gehäuses (116) des Antriebs (94) angeordnet ist, dadurch gekennzeichnet, daß die Axiallagerscheibe (132) von einer Ringöffnung (146) im Gehäuse (116) umgeben ist, wobei das Gehäuse (116) innerhalb seiner Ringöffnung (146) mit im wesentlichen radial verlaufenden Leitschaufeln (150) versehen ist.

5. Anordnung eines Magnetlagers nach Anspruch 4, dadurch gekennzeichnet, daß die Krümmung der Leitschaufeln (150) entgegengesetzt ist zur Krümmung der Radialschaufeln (142).

## Claims

1. Axial magnet bearing having an axial bearing disc (50; 76; 132), which is equipped with a central mounting hub (54; 78), in which a shaft (96) to be supported is able to be mounted, and with peripheral axial bearing faces (62, 64), and which cooperates with at least one electromagnet (28, 30; 38, 40; 130), the axial bearing disc (50; 76; 132) being provided with ducts (52; 53; 138) for conveying a gaseous coolant which essentially extend in a radial direction from the region of the mounting hub (54; 78) to the periphery of the axial bearing disc (50; 76; 132), characterised in that the axial bearing disc (50; 76; 132) consists of individual parts, a circular base disc (58), a circular top disc (60) and radial vanes (66; 142), which are interconnected in such a way that the ducts (52; 138) are bounded in the axial direction by the base disc (58) and the top disc (60), and in the radial direction by the radial vanes (66; 142), the axial bearing faces (62, 64) being arranged at the base disc (58) and at the top disc (60).

2. Magnet bearing according to Claim 1, characterised in that the radial vanes (66; 142) are bent backwards in relation to the direction of rotation (69).

3. Magnet bearing according to Claim 1, characterised in that the ducts consist, in each case, of radially and axially extending straight segments.

4. Arrangement of a magnet bearing according to at least one of the Claims 2 or 3, having a drive, especially electromotor, the magnet bearing being arranged in the interior (172) of the housing (116) of the drive (94), characterised in that the axial bearing disc (132) is surrounded by a ring opening (146) in the housing (116), the housing (116) being provided within its ring opening (146) with guide vanes (150) extending essentially radially.

5. Arrangement of a magnet bearing according to Claim 4, characterised in that the bend of the guide vanes (150) is opposite to that of the radial vanes (142).

## Revendications

1. Palier axial magnétique comportant un disque (50; 76; 132), lequel disque présente un moyeu de fixation (54; 78) central à l'intérieur duquel peut être fixé un arbre (96) à guider ainsi que des surfaces périphériques (62; 64) et coopère avec au moins un électro-aimant (28, 30; 38, 40; 130), le disque (50; 76; 132) étant pourvu de canaux (52; 53; 138) peur l'acheminement d'un fluide de refroidissement gazeux, canaux qui s'étendent sensiblement dans la direction radiale, de la région du moyeu de fixation (54; 78) jusqu'au pourtour du disque (50; 76; 132), caractérisé par le fait que le disque (50; 76; 132) est constitué d'éléments séparés, à savoir un disque principal (58) circulaire, un disque de fermeture (60) circulaire et d'ailettes radiales (66, 142), qui sont reliés entre eux de manière telle que les canaux (52, 138) soient délimités, dans la direction axiale, par le disque principal (58) et le disque de fermeture (60) et, dans la direction radiale, par les ailettes radiales (66; 142), les surfaces du palier axial (62, 64) étant aménagées sur le disque principal (58) et sur le disque de couverture (60).

2. Palier magnétique selon la revendication 1, caractérisé par le fait que les ailettes radiales (66; 142) sont recourbées vers l'arrière par rapport à la direction de rotation (69).

3. Palier magnétique selon la revendication 1, caractérisé par le fait que les canaux sont constitués chaque fois par des parties rectilignes qui s'étendent radialement et axialement.

4. Agencement d'un palier magnétique selon l'une au moins des revendications 2 ou 3 avec un dispositif d'entraînement, notamment un moteur électrique, le palier magnétique étant disposé dans la chambre intérieure (172) du carter (116) du dispositif d'entraînement (94), caractérisé par le fait que le disque (132) du palier axial est entouré par une ouverture (146) annulaire dans le carter (116), le carter (116) étant pourvu d'ailettes directrices (150) sensiblement radiales, disposées à l'intérieur de son ouverture annulaire (146).

5. Agencement d'un palier magnétique selon la revendication 4, caractérisé par le fait que la courbure des ailettes directrices (150) est opposée à la courbure des ailettes radiales (142).
